# EUROPÄISCHE PATENTSCHRIFT

(11) **EP 0 745 631 B1**
(45) Veröffentlichungstag und Bekanntmachung des Hinweises auf die Patenterteilung: **05.08.1998**
(21) Anmeldenummer: 96107970.4
(22) Anmeldetag: 20.05.1996
(51) Int. Cl.: C08G 69/14, C08G 69/46

(54) **Verfahren zur Wiederverwertung von wässrigen Extraktlösungen, die bei der Herstellung von PA 6 oder Copolyamiden anfallen**
Method of recycling aqueous extract solutions obtained during the production of PA 6 or copolyamides
Procédé de recyclage de solutions aqueuses d'extraits obtenus lors de la production de PA 6 ou de copolyamides

(30) Priorität: 31.05.1995 DE 19519819
(43) Veröffentlichungstag der Anmeldung: 04.12.1996
(73) Patentinhaber: BAYER AG, 51368 Leverkusen (DE)
(72) Erfinder: Gittinger, Andreas, Dr., 47800 Krefeld (DE); Wulff, Claus, Dr., 47800 Krefeld (DE); Haupt, Heinrich, Dr., 47800 Krefeld (DE); Idel, Karsten-Josef, Dr., 47802 Krefeld (DE)

(56) Entgegenhaltungen:
- EP-A- 0 459 206
- US-A- 4 053 457

## Beschreibung

Die Erfindung betrifft ein Verfahren zur Recyclierung (Wiederverwertung) von wäßrigen Extraktlösungen, die bei der Herstellung von Polyamiden anfallen. Das Verfahren zur Wiederverwertung der anfallenden wäßrigen Extraktlösungen besteht darin, daß die wäßrige Extraktlösung eingeengt und polymerisiert wird, wobei der Extraktlösung geringe Mengen Dicarbonsäure oder Polycarbonsäure zugesetzt werden.

Die Polymerisation von ε-Caprolactam zu Polyamid 6 verläuft nicht vollständig. Sie führt zu einem Gleichgewichtszustand, in dem das entstandene Polymere noch extrahierbare niedermolekulare Bestandteile enthält (im folgenden zusammenfassend als Extrakt bezeichnet. Unter "Extrakt" ist also die Trockenmasse der wäßrigen Extraktionslösungen zu verstehen). Diese extrahierbaren niedermolekularen Bestandteile sind im wesentlichen ε-Caprolactam und seine Oligomeren. Entsprechendes gilt für die Herstellung von Copolyamiden, die überwiegend aus Wiederholungseinheiten, die sich von Caprolactam ableiten, bestehen. Der Extrakt dieser Copolyamide hat eine ähnliche Zusammensetzung wie der Extrakt von Polyamid 6.

Die quantitative Zusammensetzung des im Gleichgewicht befindlichen Reaktionsgemisches ist temperaturabhängig. So liefert z.B. die Polymerisation von ε-Caprolactam bei 220°C ein Polyamid 6 mit rund 9% Extrakt.

Die genannten niedermolekularen Bestandteile verändern die Eigenschaft des Polyamids in unerwünschter Weise. So wirkt z.B. ε-Caprolactam in Polyamid 6 als Weichmacher, der den E-Modul und die Grenzbiegespannung senkt. Der Extrakt wirkt außerdem störend bei der Verarbeitung des Polyamids. Er führt z.B. zu Formbelägen beim Spritzguß und zu Ausdampfungen bei der Extrusion. Ferner schwitzt der Extrakt im Laufe der Zeit aus dem Polyamid aus und bildet einen Belag auf der Materialoberfläche.

Es ist deshalb notwendig, Polyamid 6 und Copolyamide, die einen wesentlichen Anteil von aus ε-Caprolactam abgeleiteten Monomereinheiten enthalten, nach der Herstellung von niedermolekularen Bestandteilen zu befreien. Technisch geschieht das z.B. durch kontinuierliches oder diskontinuierliches Extrahieren mit heißem Wasser (FR-A 882 461, DE-A 2 501 348, DE-A 2 732 328).

Die auf diese Weise erhaltene wäßrige Extraktlösung wird aus wirtschaftlichen Gründen wiederverwertet. Zum einen ersetzt der Extrakt bei seiner Wiederverwertung Monomore, zum anderen wird durch die Wiederverwertung die Beseitigung des Extrakts als Abfall vermieden. Die Wiederverwertung kann z.B. durch Polymerisation des eingedampften Extraktes zu Polyamid 6 oder zu Copolyamiden des Polyamids 6 erfolgen wie dies in US-P 4 053 457 beschrieben wird. Dabei können dem Extrakt vor der Polymerisation polyamidbildende Monomere zugesetzt werden. Diese polyamidbildenden Monomere können z.B. ε-Caprolactam oder andere Lactame sein. Bei den zugesetzten polyamidbildenden Monomeren kann es sich aber auch um Gemische aus Dicarbonsäuren und Diaminen wie z.B. Adipinsäure und Hexamethylendiamin handeln. Die Polymerisation des Extraktes erfolgt durch die für die Herstellung von Polyamiden üblichen kontinuierlichen oder diskontinuierlichen Verfahren.

EP-A 459 206, EP-A 608 454, US 5 077 381, und US-P 5 218 080 beschreiben Verfahren, nach denen die wäßrige Extraktlösung, die bei der Herstellung von Polyamid 6 anfällt, einem Hydrolyseschritt bei erhöhter Temperatur und erhöhtem Druck ausgesetzt wird, bevor sie in die Polymerisation zurückgeführt wird.

Die genannten Verfahren zur Wiederverwertung des Extraktes durch Polymerisation haben den Nachteil, daß der Extrakt langsamer polymerisiert als ε-Caprolactam. Dies führt zu niedrigeren Durchsätzen in der Polymerisation im Vergleich zur Polymerisation von ε-Caprolactam.

Es bestand daher die Aufgabe, ein verbessertes Verfahren zur Wiederverwertung des Extraktes zu entwickeln. Das Verfahren soll die Wiederverwertung des Extraktes durch Polymerisation erlauben, der bei der Herstellung von Polyamid 6 oder von Copolyamiden des Polyamids 6 anfällt. Dabei sollen die Nachteile, die aus der langsamen Polymerisation des Extraktes im Vergleich zu ε-Caprolactam folgen, verringert werden.

Überraschenderweise wurde nunmehr gefunden, daß der Zusatz geringer Mengen von Dicarbonsäure oder Polycarbonsäure zu dem bei der Herstellung von Polyamid 6 oder Copolyamiden des Polyamids 6 anfallenden Extrakt die Polymerisationsgeschwindigkeit erhöht. Dieses Ergebnis ist überraschend, weil Carbonsäuren als Molmassenregler bei der Herstellung von Polyamiden beschrieben werden. Diese Molmassenregler führen zu einer Herabsetzung der bei der Polymerisation erhaltenen Molmasse. Die Polymerisationsgeschwindigkeit kann als die nach einer bestimmten Polymerisationszeit erreichte Molmasse definiert werden. Dies bedeutet zwangsläufig, daß der Einsatz von Molmassenreglern in der üblichen Menge die Polymerisationsgeschwindigkeit verringert.

Gegenstand der Erfindung ist ein Verfahren zur Wiederverwertung von wäßrigen Extraktlösungen, die bei der Herstellung von Polyamid 6 oder bei der Herstellung von Copolyamiden, die aus mindestens 70 Gew.-% Wiederholungseinheiten, die sich von ε-Caprolactam ableiten, aufgebaut sind, anfallen, dadurch gekennzeichnet, daß die wäßrige Extraktlösung eingeengt, dem Extrakt vor, während oder nach dem Einengen oder während der Polymerisation eine Menge von 0.02 bis 20 mmol Dicarbonsäure oder Polycarbonsäuren pro kg Extrakt (Trockenmasse) zugesetzt und gegebenenfalls unter Zusatz von polyamidbildenden Monomeren polymerisiert wird.

Gegenstand der Erfindung ist also ein Verfahren zur Herstellung von Polyamid 6 oder Copolyamiden mit mindestens 70 Gew.-% Wiederholungseinheiten, die sich von εCaprolactam ableiten, wobei man wäßrige Extrakt-Lösungen, die bei der Herstellung von Polyamid 6 oder Copolyamiden mit mindestens 70 Gew.-% Wiederholungseinheiten von Caprolactam anfallen, einengt, der Extrakt-Lösung vor, während oder nach dem Einengen oder während der Polymerisation eine Menge von 0,02 bis 20 mmol Dicarbonsäure oder Polycarbonsäure pro kg Extrakt (Trockenmasse) zusetzt und gegebenenfalls unter Zusatz von polyamidbildenden Monomeren polymerisiert.

Das Einengen geschieht durch Abdestillieren des überwiegenden Anteils des in der Extraktlösung enthaltenen Wasser. Bevorzugt wird mehr als 90 % des in der wäßrigen Extraktlösungen enthaltenen Wassers vor der Polymerisation abdestilliert. Der noch verbleibende Rest an noch zu entfernendem Lösungswasser kann während der Polymerisation entfernt werden. Wurde die Polymerisation des Extraktes unter Zusatz von äquimolaren Mischungen aus Diaminen und Dicarbonsäuren zur Herstellung von Copolyamiden durchgeführt, so muß bei der Polymerisation zusätzlich zum eventuell noch verbliebenen Lösungswasser das Reaktionswasser aus der Polykondensation aus dem Reaktor entfernt werden.

Die Zugabe der Dicarbonsäuren oder Polycarbonsäuren zum Extrakt kann vor während oder nach der Einengung des Extrakts oder während der Polymerisation erfolgen. Die Zugabe der Dicarbonsäuren oder Polycarbonsäuren erfolgt bevorzugt nach der Abdestillation des überwiegenden Anteils an Lösungswasser und vor der Polymerisation.

Die Menge der dem Extrakt zugesetzten Dicarbonsäuren oder Polycarbonsäuren beträgt 0.02 bis 20 mmol Dicarbonsäuren oder Polycarbonsäuren pro kg Extrakt (Trockenmasse). Bevorzugt werden dem Extrakt 0,1 bis 10 mmol, insbesondere 1 bis 6 mmol Dicarbonsäuren oder Polycarbonsäuren pro kg Extrakt zugesetzt. Bevorzugt werden Dicarbonsäuren zugesetzt. Als Dicarbonsäuren kommen aliphatische (bevorzugt C₆-C₁₂) oder aromatische Dicarbonsäuren infrage, bevorzugt sind Adipinsäure, Terephthalsäure oder Isophthalsäure, besonders bevorzugt ist Adipinsäure. Als Polycarbonsäuren kommen aliphatische oder aromatische Polycarbonsäuren in Frage. Bevorzugt ist Trimesinsäure.

Die wäßrige Extraktlösung kann vor oder nach der Zugabe der Dicarbonsäure oder der Polycarbonsäuren einem Hydrolyseschritt unterzogen werden. Der Hydrolyseschritt kann nach einem in EP-A 459 206, EP-A 608 454, US 5 077 381 oder US 5 218 080 beschriebenen Verfahren oder nach einem anderen Verfahren nach dem Stand der Technik erfolgen.

Der Extrakt kann zur Herstellung von Polyamid 6 oder von Copolyamid des Polyamids 6 verwendet werden. Zur Herstellung von Copolyamiden werden dem Extrakt polyamidbildende Monomere zugesetzt. Als polyamidbildende Monomere kommen Lactame, Aminocarbonsäuren oder äquimolare Gemische aus Diaminen und Dicarbonsäuren in Frage. Zugesetzte Lactame können z.B. das Lactam der 6-Aminohexansäure (ε-Caprolactam), das Lactam der 11- Aminoundecansäure, das Lactam der 12-Aminododecansäure oder andere übliche Lactame sein. Die genannten Aminocarbonsäuren können auch als solche dem Extrakt zugesetzt werden. Zugesetzte äquimolare Gemische aus Diaminen und Dicarbonsäuren können als Diamine aliphatische oder aromatische Diamine wie z.B. Hexamethylendiamin, 1,4-Diaminobutan, Isophorondiamin, Xylylendiamin oder andere übliche Diamine enthalten. Zugesetzte äquimolare Gemische aus Diaminen und Dicarbonsäuren können als Dicarbonsäure aliphatische oder aromatische Dicarbonsäure wie z.B. Adipinsäure, Sebazinsäure, Terephthalsäure, Isophthalsäure oder andere übliche Dicarbonsäuren enthalten. Der Extrakt wird bevorzugt zur Herstellung von Polyamid 6 verwendet. Dabei werden dem Extrakt bezogen auf 10 Gew.-Teile Extrakt bevorzugt 0 bis 90 Gew.-Teile Polyamid bildendes Monomer, bevorzugt ε-Caprolactam oder 6-Aminohexansäure zugesetzt. Besonders bevorzugt erfolgt die Herstellung von Polyamid 6 aus dem Extrakt unter Zusatz von 1 bis 10 Gew.-Teile ε-Caprolactam bezogen auf 10 Gew.-Teile Extrakt.

Vor oder während der Polymerisation können dem Extrakt weitere übliche Zusatzstoffe zugesetzt werden. Dies können z.B. Molmassenregler wie z.B. Monocarbonsäuren sein. Auch andere übliche Zusatzstoffe wie z.B. Stabilisatoren, Nukleierungsmittel, Schmiermittel oder Füllstoffe können vor, während oder nach der Polymerisation zugesetzt werden.

Die Polymerisation des Extrakts und seiner Zusatzstoffe kann kontinuierlich oder diskontinuierlich erfolgen. Bevorzugt erfolgt die Polymerisation kontinuierlich z.B. in einem VK-Rohr.

Die erfindungsgemäß durch Wiederverwertung von Extrakt hergestellten Polyamide können den für Polyamide üblichen Verwendungen zugeführt werden. Sie können z.B. zur Herstellung von Fasern, Formkörpern, Halbzeug oder Folien dienen. Die Fasern, Formkörper, Halbzeuge oder Folien können durch Spinnen, Spritzgießen, Extrudieren, Blasformen oder andere übliche Techniken hergestellt werden. Dabei können den erfindungsgemäß hergestellten Polyamiden übliche Zusatzstoffe zugesetzt werden. Als Zusatzstoffe können zum Beispiel zugesetzt werden: faserförmige oder teilchenförmige Füllstoffe oder Verstärkungsstoffe wie z.B. Glasfasern, Glaskugeln oder mineralische Füllstoffe. Ferner können Verarbeitungshilfsmittel wie z.B. Schmiermittel oder Nukleierungsmittel zugesetzt werden. Ferner können Flammschutzmittel, Stabilisatoren, Schlagzähmodifikatoren wie z.B. Polyolefine oder andere Kautschuke zugesetzt werden. Ferner können Stoffe, die der Farbgebung dienen, oder andere übliche Zusatzstoffe zugesetzt werden.

### Beispiel

Eine Mischung aus 91 g zur Trockene eingeengtem wäßrigen Extrakt von Polyamid 6 und 10,43 g 6-Aminohexansäure werden unter Zusatz verschiedener Mengen Adipinsäure polymerisiert. Die Polymerisation erfolgt unter Rühren unter einer Stickstoffatmosphäre eine Stunde bei 200 °C und anschließend 6 Stunden bei 270 °C. Die relative Viskosität des so erhaltenen Polymerisats (gemessen an einer einprozentigen Lösung in meta-Kresol bei 25 °C mit einem Ubbelohde-Viskosimeter) dient als Maß für den in der gegebenen Polymerisationszeit erreichten Polymerisationsgrad. Die Ergebnisse sind in der folgenden Tabelle wiedergegeben.

| Beispiel-Nr. | Adipinsäurezusatz in mmol pro kg zu polymerisierendem Extrakt (Trockenmasse*) | relative Viskosität des Polymerisats |
|---|---|---|
| 1 Vergleich | 0,0 | 3.08 |
| 2 | 1,5 | 3,38 |
| 3 | 3,0 | 3,41 |
| 4 | 4,5 | 3,35 |
| 5 | 6,0 | 3,26 |

| | | |
|---|---|---|
| * Bestimmung der Trockenmasse der Extraktlösung durch Wasserbestimmung nach Karl-Fischer | | |

Aus der Tabelle ergibt sich, daß bei sonst gleichen Polymerisationsbedingungen das erfindungsgemäße Verfahren zu Polyamiden mit höherer relativer Viskosität, also höherem Molekulargewicht, führt als die Polymerisation des Extraktes ohne Zusatz von Adipinsäure.

## Patentansprüche

1. Verfahren zur Wiederverwertung von wäßrigen Extraktlösungen, die bei der Herstellung von Polyamid 6 oder bei der Herstellung von Copolyamiden, die aus mindestens 70 Gew.-% Wiederholungseinheiten, die sich von ε-Caprolactam ableiten, aufgebaut sind, anfallen, dadurch gekennzeichnet, daß die wäßrige Extraktlösung eingeengt, dem Extrakt vor, während oder nach dem Einengen oder während der Polymerisation eine Menge von 0,02 bis 20 mmol Dicarbonsäure oder Polycarbonsäuren pro kg Extrakt (Trockenmasse) zugesetzt und gegebenenfalls unter Zusatz von polyamidbildenden Monomeren polymerisiert wird.

2. Verfahren zur Herstellung von Polyamid 6 oder Copolyamiden mit mindestens 70 Gew.-% Wiederholungseinheiten, die sich von ε-Caprolactam ableiten, wobei man wäßrige Extrakt-Lösungen gemäß Anspruch 1 polymerisiert.

3. Verfahren gemäß Anspruch 1, wobei 0,1 bis 10 mmol Dicarbon- oder Polycarbonsäure eingesetzt wird.

4. Verfahren gemäß Anspruch 1, wobei 1 bis 6 mmol Dicarbon- oder Polycarbonsäure eingesetzt wird.

5. Verfahren gemäß Anspruch 1, wobei aliphatische oder aromatische Dicarbonsäuren und Polycarbonsäuren eingesetzt werden.

6. Verfahren gemäß Anspruch 1, wobei als Dicarbonsäuren C₆-C₁₂-Alkyl-Dicarbonsäuren, Terephthalsäure- oder Isophthalsäure und als Polycarbonsäure Trimesinsäure eingesetzt werden.

7. Verfahren gemäß Anspruch 1, wobei als polyamidbildende Monomere, Lactame, Aminocarbonsäuren oder äquimolare Gemische aus Diaminen und Dicarbonsäuren eingesetzt werden.

8. Verfahren gemäß Anspruch 1, wobei dem Extrakt, bezogen auf 10 Gew.-Teile Extrakt (Trockenmasse) 0 bis 90 Gew.-Teile polyamidbildender Monomere zugesetzt werden.

## Claims

1. Method for reprocessing aqueous extract solutions obtained in the production of polyamide 6 or in the production of copolyamides consisting of not less than 70% by weight of repeating units derived from ε-caprolactum, characterised in that the aqueous extract solution is concentrated, an amount of 0.02 to 20 mmol dicarboxylic acid or polycarboxylic acid per kg extract (dry matter) are added to the extract prior to, during or after concentration or in the process of polymerisation wherein polymerisation is effected optionally by the addition of polyamide-forming monomers.

2. Method for producing polyamide 6 or copolyamides containing not less than 70% by weight of repeating units derived from ε-caprolactam, whereby aqueous extract solutions are polymerised in accordance with Claim 1.

3. Method according to Claim 1, wherein 0.1 to 10 mmol dicarboxylic or polycarboxylic acid are used.

4. Method according to Claim 1, wherein 1 to 6 mmol dicarboxylic or polycarboxylic acid are used.

5. Method according to Claim 1, wherein aliphatic or aromatic dicarboxylic acid and polycarboxylic acids are used.

6. Method according to Claim 1, wherein C₆-C₁₂ alkyldicarboxylic acid, terephthalic acid or isophthalic acid as the dicarboxylic acid and of trimesic acid as the polycarboxylic acid are used.

7. Method according to Claim 1, wherein lactams, aminocarboxylic acids or equimolar mixtures of diamines and dicarboxylic acids as polyamide-forming monomers are used.

8. Method according to Claim 1, whereby 0 to 90 parts by weight of polyamide-forming monomers per 10 parts by weight of extract (dry matter) are added to the extract.

## Revendications

1. Procédé pour réutiliser les extraits aqueux formés à la fabrication du polyamide 6 ou à la fabrication de copolyamides constitués pour au moins 70 % en poids de motifs récurrents dérivant de l'ε-caprolactame, caractérisé en ce que l'on concentre l'extrait aqueux, on ajoute à l'extrait avant, durant ou après la concentration ou durant la polymérisation une quantité de 0,02 à 20 mmol d'un acide dicarboxylique ou d'un acide polycarboxylique par kilogramme de l'extrait (masse sèche) et on polymérise, le cas échéant avec adjonction de monomères formant des polyamides.

2. Procédé de préparation du polyamide 6 ou de copolyamides à au moins 70 % en poids de motifs répétés dérivant de l'ε-caprolactame, selon lequel on polymérise des extraits aqueux selon la revendication 1.

3. Procédé selon la revendication 1, selon lequel on utilise de 0,1 à 10 mmol d'acide dicarboxylique ou polycarboxylique.

4. Procédé selon la revendication 1, selon lequel on utilise de 1 à 6 mmol d'acide dicarboxylique ou polycarboxylique.

5. Procédé selon la revendication 1, selon lequel on utilise des acides dicarboxyliques et polycarboxyliques aliphatiques ou aromatiques.

6. Procédé selon la revendication 1, selon lequel on utilise en tant qu'acides dicarboxyliques des acides (alkyle en C₆-C₁₂)-dicarboxyliques, l'acide téréphtalique ou l'acide isophtalique et en tant qu'acide polycarboxylique l'acide trimésique.

7. Procédé selon la revendication 1, selon lequel on utilise en tant que monomères formant des polyamides, des lactames, des acides aminocarboxyliques ou des mélanges équimoléculaires de diamines et d'acides dicarboxyliques.

8. Procédé selon la revendication 1, selon lequel on ajoute à l'extrait, pour 10 parties en poids de ce dernier (masse sèche), de 0 à 90 parties en poids de monomères formant des polyamides.
